# EUROPEAN PATENT SPECIFICATION

(11) **EP 2 165 389 B1**
(45) Date of publication and mention of the grant of the patent: **09.02.2011**
(21) Application number: 08750982.4
(22) Date of filing: 20.05.2008
(51) Int. Cl.: H01R 4/70

(54) **SAFETY PLUG FOR SEALING BUS BAR END CONNECTIONS**
SICHERHEITSSTECKER ZUR ABDICHTUNG VON BUSSCHIENEN-ENDANSCHLÜSSEN
BOUCHON DE SÉCURITÉ POUR TENIR DE FAÇON ÉTANCHE DES CONNEXIONS D'EXTRÉMITÉ DE BARRE BUS

(30) Priority: 10.07.2007 US 959146 P
(43) Date of publication of application: 24.03.2010
(73) Proprietor: Clipper Windpower, Inc., Carpinteria CA 93013 (US)
(72) Inventor: PARSONS, James, Ventura, CA 93003 (US); COUSINEAU, Kevin, L., Lompoc, CA 93436 (US); MASHAL, Hanif, Ventura, CA 93004 (US)
(74) Representative: Zenz
(86) International application number: PCT/IB2008/001245
(87) International publication number: WO 2009/007806

(56) References cited:
- EP-A- 0 829 927
- WO-A-01/29932
- US-A- 1 708 292
- US-A- 4 283 597
- US-A1- 2004 161 968

## Description

### Field of the Invention

This invention relates to sealed electrical wires and more particularly to an environmentally sealed covering for exposed portions of electrical wires or cables. The invention also relates to a method for enclosing at least one electrical splice between at least one electrical wire and at least one bus bar.

### Description of the Prior Art

US 2004/0161968 A1 to Cawood discloses a electrical connector, the electrical connector, inter alaia, comprises an insulating boot, the insulating boot comprises an insulating tube and at least one rupturable seal closing the insulating tube, wherein the rupturable seal breaks upon initial insertion of an cable end thereto.

United States Patent 4,451,696 to Beinhaur discloses a splice sealant device. A splice enclosure suitable for enclosing an electrical splice or connection is utilized. A sealant material is disposed in the splice enclosure. The splice enclosure has one or more compression buttons such that upon application of the splice enclosure to the splice, compression of the buttons causes the sealant, through hydraulic pressure, to completely fill all voids which may exist, forcing the sealant around and along the connector and wire. This environmentally seals the splice and prohibits the contamination of the splice, which may affect its electrical integrity.

The splice-sealing device has first and second half members, each a mirror image of the other, hinged together. The first and second halves define cable channels for receiving cables, the channels extending from the ends of the first and second halves to a cavity contained within. A centrally positioned compression button is provided being compressible for hydraulically pushing a sealant through the channels and into the cavity, thereby filling all voids around the splice and the cables so as to form an insulating seal.

Another method currently in use is shrink tubing used to cover electrical bus bar-to-cable-end connections. The high voltage bus bar electrical connections are sealed from the environment by the heat-shrink tubing. This is universally applied in insulated protection of bus bars for high-low voltage switch cabinets and avoids short circuit fault caused by small animals such as rodents and snakes. It also insulates the bus bar from chemical corrosion and avoids accidental injury.

Currently, the heat shrink tube is heated in place, which may adversely melt the protective plastic rectangular tube that houses the electrical bus bar. Also, if inspection or repair is necessary the shrink tube must be removed by cutting and must be re-installed. The joint, at the bus bar-to-wire interface, can then be separated, cleaned and re-installed by standard installation procedures, which means that a new replacement heat-shrink tube must be installed.

The prior art coverings described above can be used only once, i.e. after an inspection or a repair of the splice or insertion of a cable end, a new covering has to be installed. Therefore, it is an object of the invention to provide a covering which can be re-used after is has been removed from a splice.

It is a further object of the present invention to provide a method for enclosing an electrical splice with a re-usable covering.

### SUMMARY OF THE INVENTION

The first object of the invention is solved by a covering for enclosing at least one electrical splice between at least one electrical cable or wire and at least one bus bar, wherein the covering comprises a plug and at least one cover shield which houses a bus bar and comprises at least two fasteners.

The plug comprises first and second half members which are hinged together.

The first and second half members define, when closed, at least one cylindrical cavity for receiving an electrical cable (or wire). Each of the members of the plug comprises a proximate and a distal end, wherein the distal ends of the members define the distal end of the plug, the cable end, and the proximate ends of the members define the proximate end of the plug (the shield end).

The distal end of the plug has, when closed, a first geometric shape for receiving the end of the at least one electrical cable, and the proximate end of the plug has a second geometrical shape for engaging with the at least one cover shield, wherein the shape of the proximate end of the plug corresponds, when the plug is closed, with the shape of the cover shield to fit into the cover shield.

The term "shape of the distal end of the plug" relates to a shape which is defined by both distal ends of the first and the second members in the closed state of the plug and the term "shape of the proximate end of the plug" relates to a shape which is defined by both proximate ends of the first and second members in the closed state of the plug.

Each of the first and second half members comprises at least one fastener at opposing sides of the proximate ends to mate with the fasteners of a cover shield, and each of the first and second members comprises at least one recess, the recesses being assigned to the fasteners of the plug and being arranged between the fasteners and the inner cylindrical cavity. At least the plug areas between the fasteners and the recesses are made of a resilient material.

The invention has the advantage that the covering can be installed without any tools. The cover shield is slipped down over the bus bar tube far enough to expose the bus bar end connector. The lug end of the cable is then connected to the bus bar in the usual manner by bolts. The cover shield is then slipped up far enough to cover the bus bar end connector and the attached cable (the splice). The plug is then fitted around the cable and pressed until closed. The proximate end of the plug, which is formed of the proximate ends of the first and the second half members, is then pushed into the cover shield. So that the proximate end can be pushed into the cover shield, the fasteners of the plug are pressed in. Since recesses are assigned to the fasteners, and the plug areas between the fasteners and the recesses are made of a resilient material, the fasteners can be bulged in. With the fasteners bulged in, the cover shield can be pushed over the proximate end (or the proximate end can be pushed into the cover shield, depending on whether the plug or the cover shield is moved). After the cover shield and the plug are moved in place, the fasteners of the proximate end are released and snap into place, i.e. the fasteners of the cover shield mate with the fasteners of the proximate end of the plug, and the splice between the electrical cable and the bus bar is enclosed by the covering. The plug is held in place, i.e. held closed, by the cover shield and therefore no further means to close the plug are needed.

If an inspection of the splice or a repair of a problematic splice is necessary the covering can also be opened without any tools. To open the covering, the fasteners of the proximate end of the plug are bulged in. With bulged in plug fasteners there is no engagement between the cover shield and the plug, and the plug or the cover shield can be moved to release the splice.

The covering, or at least the plug, can be re-used if, for example, a covering of a special splice is no longer necessary. Such a re-usage of the plug is possible since the plug is closed and held in place by the cover shield only. After the engagement between the fasteners is released, the plug can be opened and removed from the electrical wire.

The fasteners of the plug and the fasteners of the cover shield have to be tuned with each other. In a preferred embodiment the plug fasteners are male buttons and the cover shield fasteners are mating female holes. This configuration of the fasteners is constructive very simple and therefore inexpensive.

It is preferred that the shape of the distal end of the plug is cylindrical and the shape of the proximate end of the plug (16a, 16b) is rectangular. With a cylindrical distal end and a rectangular proximate end the shapes of the distal and the proximate ends are adapted to the shape of the cable and the cover shield so that an introduction of water and/or foreign contaminants, which may affect the integrity of the splice, is made more difficult. Furthermore, the overall stability of the covering is enhanced by this shaping of the distal and the proximate ends.

To facilitate the alignment of the cover fasteners and the plug fasteners the members of a preferred embodiment of the covering comprise a ledge in the area between the distal and the proximate ends of the members. This ledge forms, when the plug is closed, a stop for the cover shield. When the plug is pushed into the cover shield the movement of the plug into the cover shield is stopped by the ledge, i.e. the depth of penetration of the plug into the cover shield is defined by the position of the ledge. By defining the depth of penetration the alignment of the fasteners can be facilitated if the cover shield fasteners are arranged in accordance with the depth of penetration.

The second object of the invention is solved by a method which comprises the steps of exposing the at least one bus bar end connector by moving a corresponding cover shield comprising at least two fasteners, connecting the at least one electrical cable lug end with a corresponding bus bar end connector, fitting a plug around the at least one electrical cable, the plug comprising at least two fasteners to mate with the cover shield fasteners, and connecting the plug with the at least one cover shield by overlapping the cover shield with the plug so that the cover shield fasteners engage with the plug fasteners.

### BRIEF DESCRIPTION OF THE DRAWINGS

The invention will be described in detail with reference to the drawings in which:
FIGURE 1 is a perspective top view of one embodiment of the plug of the covering, which is partially transparent;
FIGURE 2 is a perspective top view of the embodiment of the plug of FIGURE 1 in a closed position;
FIGURE 3 is a perspective bottom view of the embodiment of the plug of FIGURE 1 in a closed position;
FIGURE 4 is a side view of the embodiment of the plug of FIGURE 1 in a closed position;
FIGURE 5 is a cross-sectional view of the embodiment of the plug of FIGURE 4 along the view line V-V;
FIGURE 6 is a cross-sectional view of the embodiment of the plug of FIGURE 4 along the view line VI-VI;
FIGURE 7 is a top view of the embodiment of the plug of FIGURE 4 in a closed position;
FIGURE 8 is a cross-sectional view of the embodiment of the plug of FIGURE 7 along the view line VIII-VIII;
FIGURE 9 is a perspective top view of a bus bar assembly in which both the prior art and one embodiment of the invention is shown; and,
FIGURE 10 is a perspective view of the embodiment of the plug of FIGURE 2 shown in the open position.

### DESCRIPTION OF THE PREFERRED EMBODIMENTS

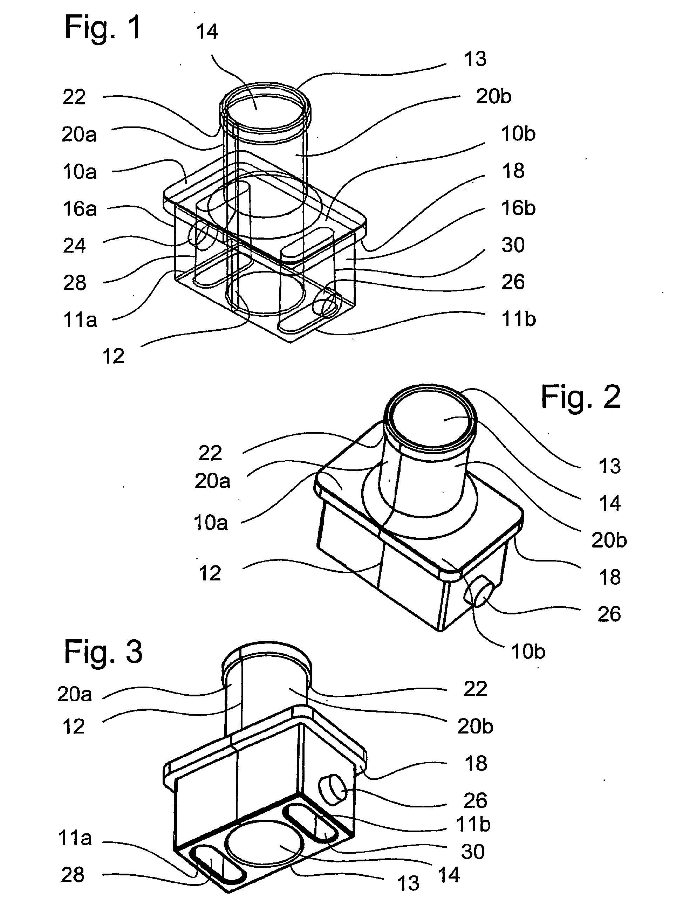

Refer to FIGURE 1, which is a perspective top view of an embodiment of the plug of the covering of the invention, which is partially transparent; FIGURE 2, which is a perspective top view of the plug of FIGURE 1 in a closed position; and to FIGURE 3, which is a perspective bottom view of the plug of FIGURE 1 in a closed position.

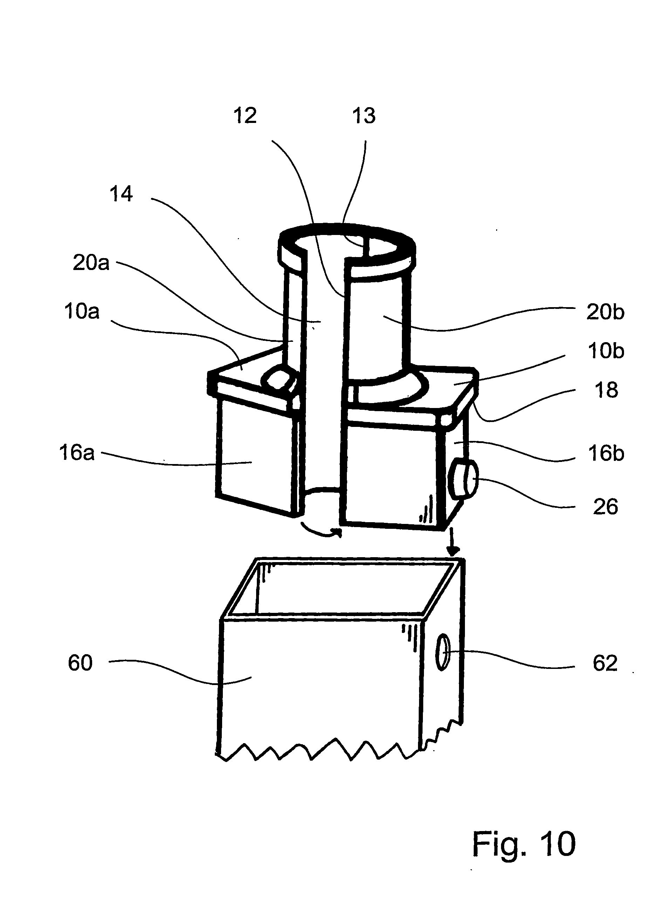

The plug (10) is cut through at split line (12) such that the plug (10) can be opened like a clamshell (see FIGURE 10), with the backside area (13) acting as a hinge, wherein the hinge connects a first and a second half member (10a, 10b).

The inner portion of the plug (10) defines a cylindrical cavity (14). The first and the second half members each comprise a proximate end (16a, 16b) and a distal end (20a, 20b). The proximate ends of the members define the proximate end of the plug (16a, 16b) for engaging with a cover shield (the shield end) and the distal ends define a distal end of the plug (16a, 16b) for receiving the electrical wire (the wire or cable end).

The proximate end (16a, 16b) of the plug (10) shown in FIGURES 1 - 3 is rectangular in shape to fit into a rectangular shaped cover shield (not shown in FIGURES 1 - 3) for a rectangular shaped bus bar conduit (as can be seen from the various figures, the shape of the plug first end is rectangular when the plug is closed).

Although the shape of the plug proximate end (16a, 16b), which is provided by the relevant ends of the first and the second half members, has a rectangular shape in the embodiment shown in FIGURE 1, in other embodiments of the plug the shape of the plug proximate end (16a, 16b) can be round, polygonal, or elliptical.

A ledge (18) is provided between the proximate and the distal ends of the plug, wherein the ledge (18) defines a stop for the (not shown) cover shield when the plug is inserted into the cover shield (for a detailed description see below).

The distal end (20a, 20b) (cable end) of the plug shown in figure 1 is cylindrical in shape to wrap around a cable and has a lip (22) for housing a cable or tie wrap, which may be used to restrain the plug with respect to the cable. Fasteners in the form of male buttons (24, 26) are provided on each side of the plug proximate end (16a, 16b), i.e. each of the first and second half members comprises one of the male buttons. Inner relieves or recesses (28, 30) are arranged between the buttons (24, 26) and the cavity. The plug areas between the buttons and the recesses are made of a resilient material, such as Bayblend®. Bayblend® is the trade name used by Bayer for its product line of amorphous, thermoplastic polymer blends based on polycarbonate and ABS. Bayblend® is material from which a bus bar conduit is made.

The resilient material between the fasteners and the recesses (28, 30) creates resilience, such that each button can be moved in and out.

In another embodiment the whole plug can be made of a resilient material, such as Bayblend®.

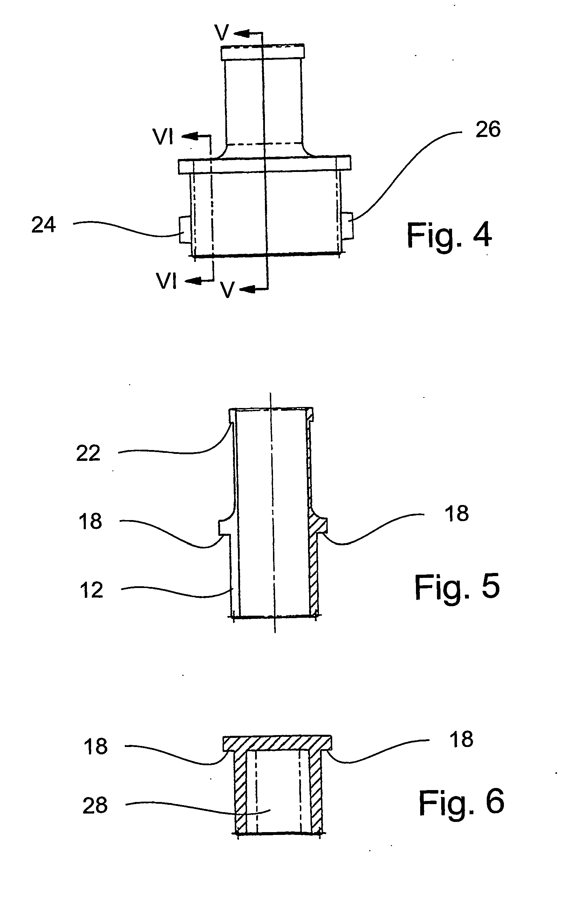

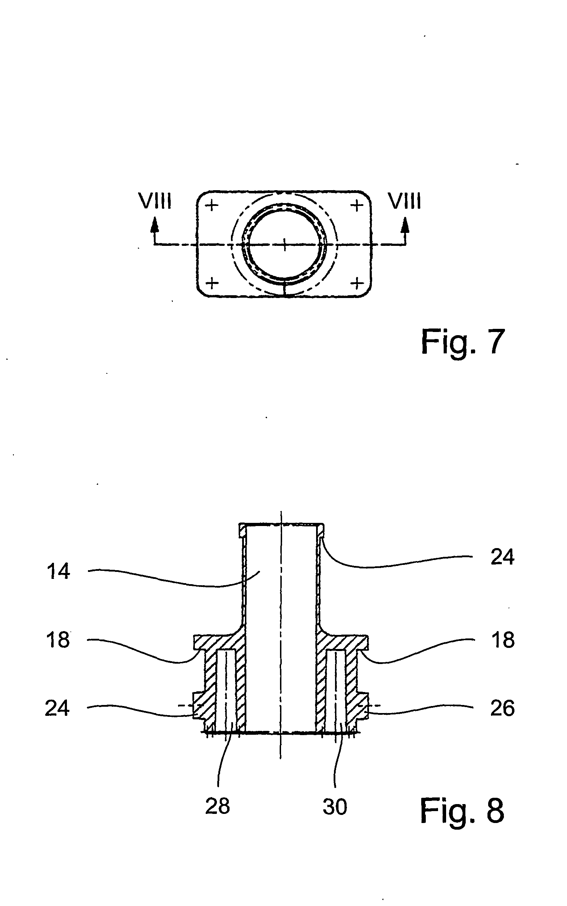

FIGURE 4 is a side view of the plug (10) of FIGURE 1 in a closed position. Refer to FIGURE 5, which is a cross-sectional view of the plug (10) along the view line V-V of FIGURE 4; FIGURE 6, which is a cross-sectional view of the plug (10) along the view line VI-VI of FIGURE 4; FIGURE 7, which is a top view of the plug (10) of FIGURE 4 in a closed position; and FIGURE 8, which is a cross-sectional view of the plug (10) of FIGURE 7 along the view line VIII-VIII. These figures illustrate in detail the structure of the plug (10).

The embodiment of the plug shown in FIGURES 1 - 8 is adapted for enclosing one electrical splice between one electrical wire (or cable) and one bus bar. However, the covering, and therefore the plug, can be adapted for enclosing a plurality of splices. In such an embodiment the members of the plug comprise, for example, a plurality of inner cavities. In such an embodiment the shape and/or the number of cover shields has to be configured accordingly.

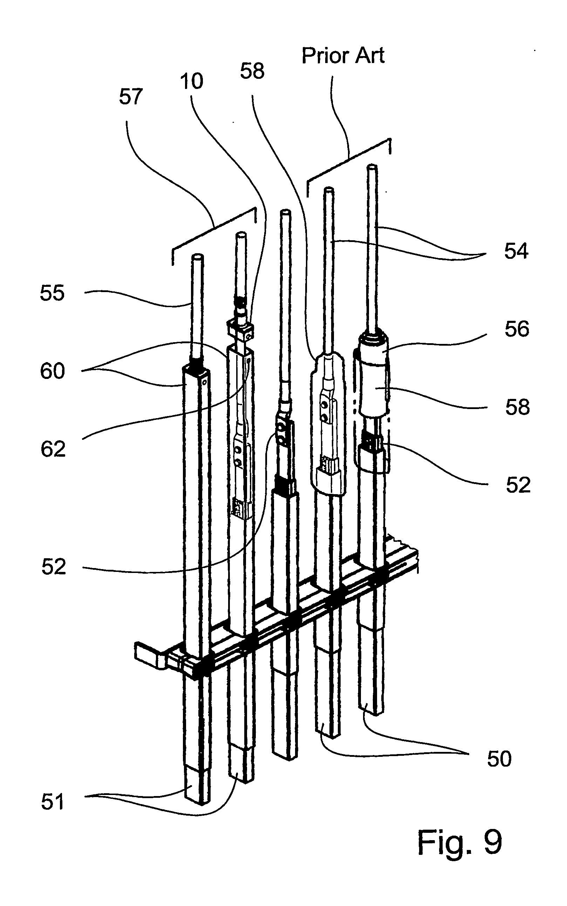

Refer to FIGURE 9, which is a perspective top view of a bus bar assembly in which the invention is embodied (left side of FIGURE 9) and FIGURE 10, which is a perspective view of the plug (10) of FIGURE 2 shown in the open position. These drawings illustrate the method of the invention, as compared with the prior art (right side of FIGURE 9).

FIGURE 9, left side, shows electrical wires (55) connected to bus bars (51). A cover shield (60) has a first geometric shape. The plug (10) has two opposing hinged shells or members forming, in a closed configuration, the first geometric shape at the proximate end (16a, 16b) of the plug (10) and the second geometric shape at the distal end (20a, 20b). The opposing hinged shells when closed define the cavity (14) for receiving the cable (55), and a flange at the proximate end (16a, 16b) for engaging with the cover shield (60). Fasteners (24, 26) are provided at the proximate end (16a, 16b) of the plug constructed so as to mate with fasteners (62) of the cover shield 60.

The cover shield (60) is slipped down over the bus bar conduit tube to expose the bus bar end connector. The cable wire lug end is then connected to the bus bar. The cover shield (60) is then slipped up to cover the bus bar end connector and attached cable wire. The plug (10) is fitted around the cable and pushed into the cover shield (60) and snapped into place by means of the male button (24, 26) that fits into mating female holes (62) in the cover shield (60).

### A Prior Art Method

In the prior art shrink-wrap method, a protective, plastic rectangular tube (50) houses a bus bar (52), which is exposed. The cable lug end of a cable (54) is bolted to the bus bar resulting in a splice around which three layers (56) of heat shrink are heat shrunk. The three layers (56) of shrink-wrap are heat shrunk with a larger shrink-wrap (58), which also surrounds the end of the conduit (50). This has the disadvantage that the heat applied to the shrink-wrap may also melt the conduit (50). If damage to the conduit or the splice occurs, the entire connection must be disassembled. This requires replacement of conduit (50), shrink-wrap (56) and one layer of shrink-wrap (58).

### Method of the Present Invention

The method of the present invention is shown at the left side (57) of FIGURE 9. The protective plastic rectangular tube (51) that houses the bus bar is fitted with a rectangular overlap cover shield (60) long enough to provide electrical and mechanical protection. The plug (10) has first and second half members, each a mirror image of the other and is hinged in a clamshell like structure, as shown in FIGURE 10. The first and second halves when closed define a cavity, a cable channel at one end for receiving a cable, and at the other end a rectangular flange that will fit into or over the rectangular overlap cover shield (60). The cover shield (60) is slipped down over the bus bar tube (51) far enough to expose the bus bar end connector. The lug end of the cable wire (55) is then connected to the bus bar in the usual manner by bolts. The cover shield (60) is then slipped up to cover the bus bar end connector and attached cable wire (55) (the splice). The plug (10) is opened up as shown in FIGURE 10 and is then fitted around the insulated wire. The plug (10) is closed and pushed into the cover shield (60) and snapped into place by means of the male buttons (24, 26) that fit into mating female holes (62) in the cover shield (60). A cable tie can then be tightened around the distal or cable end of the plug 10.

To disassemble and service the splice, first the cable tie (if installed) is cut away. The buttons (24, 26) of the plug are pushed inwards with the inner recess (28) and inner recess (30) and the plug areas between the recesses and the fasteners providing resilience, such that each button can move in and out. The plug (10) is lifted out, opened and removed. The cover shield is now free to be slipped down thus exposing the splice for inspection and repair.

The invention has been illustrated by showing a preferred embodiment of the plug, which fits into a shield cover. It should be understood by those skilled in the art that the plug could be modified to fit over a shield cover. Likewise, the male buttons can be provided on the cover shield, in which case and mating holes would be provided in the device.

It will be understood by those skilled that the plug (10) may be fitted with gasket material at the split line (12), at the surfaces of the plug that meet the cable (55), at the surfaces that meet the cover shield (60), and other joints to ensure a water-tight fit.

## Claims

1. A covering for enclosing at least one electrical splice between at least one electrical wire and at least one bus bar, comprising:
a plug (10) and
at least one cover shield (60) housing a bus bar and comprising at least two fasteners (62),
the plug (10) **characterised in that** has first and second half members (10a, 10b) hinged together, the first and second half members defining, when closed, at least one cylindrical cavity (14) for receiving an electrical wire, the first and second half members having a proximate end (20a, 20b) of a first geometric shape for receiving the end of the at least one electrical wire and a distal end (16a, 16b) of a second geometrical shape for engaging with the at least one cover shield (60), wherein the shape of the distal end (16a, 16b) corresponds with the shape of the cover shield (60) to fit into or over the cover shield (60),
each of the first and second half members (10a, 10b) comprising at least one fastener (24, 26) at opposing sides of the distal ends (16a, 16b) to mate with the fasteners (62) of a cover shield (60), and each member (10a, 10b) comprising at least one recess (28, 30), the recesses being assigned to the fasteners (24, 26) of the plug (10) and arranged between the fasteners (24, 26) and the cylindrical cavity (14), wherein at least the plug area (11a, 11b) between the fasteners (24, 26) and the recesses (28, 30) is made of a resilient material.

2. The covering of claim 1, wherein the plug fasteners (24, 26) are male buttons and the cover shield fasteners (62) are mating female holes.

3. The covering of claim 1 or 2, wherein the shape of the proximate end (20a, 20b) is cylindrical and the shape of the distal end (16a, 16b) is rectangular.

4. The covering of any of the claims 1 - 3, wherein each of the members (10a, 10b) comprises a ledge (18) in the area between the proximate (20a, 20b) and the distal (16a, 16b) end.

5. The covering of claim 4, wherein the cylindrical proximate end (16a, 16b) comprises a lip (22).

6. A method using the covering of any of the claims 1-5 for enclosing at least one electrical splice between at least one electrical wire and at least one bus bar, comprising the steps:
exposing the at least one bus bar end connector by moving the corresponding cover shield (60) comprising at least two fasteners (62),
connecting the at least one electrical wire lug end with a corresponding bus bar end connector,
fitting the plug (10) around the at least one electrical wire, the plug (10) comprising at least two fasteners (24, 26) to mate with the cover shield fasteners (62), and
connecting the plug (10) with the at least one cover shield (60) by overlapping the cover shield (60) with the plug (10) so that the cover shield fasteners (62) engage with the plug fasteners (24, 26).

7. The method according to claim 6, wherein the plug fasteners (24, 26) are male buttons and the cover shield fasteners (62) are mating female holes.

## Patentansprüche

1. Abdeckung zum Umschließen mindestens eines elektrischen Spleißes zwischen mindestens einem elektrischen Kabel und mindestens einer Busschiene, umfassend:
einen Stecker (10) und
mindestens einen eine Busschiene enthaltenden Schutzschirm (60), und
umfassend mindestens zwei Verschlüsse (62),
**dadurch gekennzeichnet, dass** der Stecker (10) aus ersten und zweiten durch ein Scharnier miteinander verbundenen Hälften (10a, 10b) besteht, die im geschlossenen Zustand mindestens einen zylinderförmigen Hohlraum (14) zur Aufnahme eines elektrischen Kabels definieren, wobei die ersten und zweiten Hälften ein nahes Ende (20a, 20b) einer ersten geometrischen Form zur Aufnahme des Endes des mindestens einen elektrischen Kabels und ein entferntes Ende (16a, 16b) einer zweiten geometrischen Form zum Ineinandergreifen mit dem mindestens einen Schutzschirm (60) aufweist, wobei die Form des entfernten Endes (16a, 16b) der Form des Schutzschirmes (60) entspricht, damit dieses Ende in den oder über den Schutzschirm (60) passt,
wobei die ersten und zweiten Hälften (10a, 10b) mindestens je einen Verschluss (24, 26) an gegenüberliegenden Seiten der entfernten Enden (16a, 16b) aufweisen, die mit den Verschlüssen (62) des Schutzschirmes (60) kooperieren, und jede Hälfte (10a, 10b) mindestens eine Ausnehmung (28, 30) aufweist, wobei die Ausnehmungen den Verschlüssen (24, 26) des Steckers (10) zugeordnet und zwischen den Verschlüssen (24, 26) und dem zylinderförmigen Hohlraum (14) angeordnet sind, wobei mindestens der Steckerbereich (11a, 11b) zwischen den Verschlüssen (24, 26) und den Ausnehmungen (28, 30) aus elastischem Material hergestellt ist.

2. Abdeckung nach Anspruch 1, wobei die Steckverschlüsse (24, 26) männliche Köpfe und die Schutzschirmverschlüsse (62) darauf passende weibliche Löcher sind.

3. Abdeckung nach Anspruch 1 oder 2, wobei die Form des nahen Endes (20a, 20b) zylinderförmig und die Form des entfernten Endes (16a, 16b) rechteckig ist.

4. Abdeckung nach einem der Ansprüche 1 bis 3, wobei jede der Hälften (10a, 10b) eine Leiste (18) im Bereich zwischen dem nahen (20a, 20b) und dem entfernten (16a, 16b) Ende aufweist.

5. Abdeckung nach Anspruch 4, wobei das zylinderförmige nahe Ende (16a, 16b) eine Lippe (22) aufweist.

6. Verfahren unter Einsatz der Abdeckung nach einem der Ansprüche 1 bis 5 zum Umschließen mindestens eines elektrischen Spleißes zwischen mindestens einem elektrischen Kabel und mindestens einer Busschiene, umfassend folgende Schritte:
Freilegen des mindestens einen Busschienen-Endanschlusses durch Verschieben des mindestens zwei Verschlüsse (62) umfassenden entsprechenden Schutzschirmes (60),
Verbinden des mindestens einen elektrischen Kabelschuhendes mit einem entsprechenden Busschienen-Endanschluss,
Aufpassen des Steckers (10) auf das mindestens eine elektrische Kabel, welcher Stecker (10) mindestens zwei Verschlüsse (24, 26) aufweist, die mit den Schutzschirmverschlüssen (62) kooperieren, und
Verbinden des Steckers (10) mit dem mindestens einen Schutzschirm (60), indem der Schutzschirm (60) über den Stecker (10) geschoben wird, damit die Schutzschirmverschlüsse (62) und die Steckverschlüsse (24, 26) ineinandergreifen.

7. Verfahren nach Anspruch 6, wobei die Steckverschlüsse (24, 26) männliche Knöpfe und die Schutzschirmverschlüsse (62) passende weibliche Löcher sind.

## Revendications

1. Revêtement pour enserrer au moins une connexion électrique entre au moins un fil électrique et au moins une barre de bus, comprenant :
un bouchon (10) et
au moins un blindage de recouvrement (60) logeant une
barre de bus et
comprenant au moins deux attaches (62),
**caractérisé en ce que** le bouchon (10) a un premier et
un second demi-élément (10a, 10b) articulés ensemble, les premier et second demi-éléments définissant, une fois fermés, au moins une cavité cylindrique (14) pour recevoir un fil électrique, les premier et second demi-éléments ayant une extrémité proximale (20a, 20b) d'une première forme géométrique pour recevoir l'extrémité du au moins un fil électrique et une extrémité distale (16a, 16b) d'une seconde forme géométrique pour s'engager sur le au moins un blindage de recouvrement (60), dans lequel la forme de l'extrémité distale (16a, 16b) correspond à la forme du blindage de recouvrement (60) pour s'ajuster dans ou sur le blindage de recouvrement (60),
chacun des premier et second demi-éléments (10a, 10b) comprenant au moins une attache (24, 26) sur les côtés opposés des extrémités distales (16a, 16b) pour s'engager sur les attaches (62) d'un blindage de recouvrement (60), et chaque élément (10a, 10b) comprenant au moins un évidement (28, 30), les évidements étant affectés aux attaches (24, 26) du bouchon (10) et ménagés entre les attaches (24, 26) et la cavité cylindrique (14), dans lequel au moins la région (11a, 11b) du bouchon entre les attaches (24, 26) et les évidements (28, 30) est fabriquée en matériau élastique.

2. Revêtement selon la revendication 1, dans lequel les attaches (24, 26) du bouchon sont des boutons mâles et les attaches (62) du blindage de recouvrement sont des orifices femelles conjugués.

3. Revêtement selon la revendication 1 ou 2, dans lequel la forme de l'extrémité proximale (20a, 20b) est cylindrique et la forme de l'extrémité distale (16a, 16b) est rectangulaire.

4. Revêtement selon l'une quelconque des revendications 1 à 3, dans lequel chacun des éléments (10a, 10b) comprend une moulure (18) dans la région entre l'extrémité proximale (20a, 20b) et l'extrémité distale (16a, 16b).

5. Revêtement selon la revendication 4, dans lequel l'extrémité proximale cylindrique (16a, 16b) comprend une lèvre (22).

6. Procédé utilisant le revêtement selon l'une quelconque des revendications 1 à 5 pour enserrer au moins une connexion électrique entre au moins un fil électrique et au moins une barre de bus, comprenant les étapes consistant à :
exposer le au moins un connecteur d'extrémité de la barre de bus en déplaçant le blindage de recouvrement correspondant (60) comprenant au moins deux attaches (62),
connecter la au moins une extrémité de cosse de fil électrique à un connecteur d'extrémité de barre de bus correspondant,
ajuster le bouchon (10) autour du au moins un fil électrique, le bouchon (10) comprenant au moins deux attaches (24, 26) pour s'engager sur les attaches (62) du blindage de recouvrement, et
connecter le bouchon (10) audit au moins un blindage de recouvrement (60) par chevauchement du blindage de recouvrement (60) sur le bouchon (10) de sorte que les attaches (62) du blindage de recouvrement s'engagent sur les attaches (24, 26) du bouchon.

7. Procédé selon la revendication 6, dans lequel les attaches (24, 26) du bouchon sont des boutons mâles et les attaches (62) du blindage de recouvrement sont des orifices femelles conjugués.
